# EUROPEAN PATENT APPLICATION

(11) **EP 4 571 945 A1**
(43) Date of publication of application: **18.06.2025**
(21) Application number: 24815820.6
(22) Date of filing: 27.05.2024
(51) Int. Cl.: H01M 10/6556, H01M 10/6554, H01M 10/613

(54) **HEAT SINK ASSEMBLY**

(30) Priority: 02.06.2023 KR 20230071921
(71) Applicant: LG Energy Solution, Ltd., Seoul 07335 (KR)
(72) Inventor: HUR, Nam Hoon, Daejeon 34122 (KR); LEE, Hyoung Suk, Daejeon 34122 (KR); SHIN, Ju Hwan, Daejeon 34122 (KR); LEE, Sang Yoon, Daejeon 34122 (KR)
(74) Representative: Plasseraud IP
(86) International application number: PCT/KR2024/007142
(87) International publication number: WO 2024/248444

(57) **Abstract**

A heat sink assembly including first and second heat sinks having a plurality of ribs integrally molded along a length direction by extrusion molding, the spaces between the ribs forming a flow path through which a coolant flows, the first and second surfaces at both ends of the length direction being open is provided. The first and second heat sinks have communication ports on one side wall adjacent to the second surface, and the first and second heat sinks are integrally formed by the side walls forming a bonding surface in a way that the communication ports align. The ribs of the first and second heat sinks have a length such that both ends thereof are spaced apart from the first and second surfaces by a predetermined distance, and the open first and second surfaces of both ends of the first and second heat sinks are closed by end plugs inserted into the first surface and the second surface and spaced apart from the ends of the ribs.

## Description

### [Technical Field]

The present disclosure relates to a heat sink assembly mounted to a bottom surface of a battery pack having a plurality of secondary batteries to facilitate heat dissipation of the battery pack.

This application claims the benefit of priority to Korean Patent Application No. 10-2023-0071921, filed on June 2, 2023, the disclosure of which is incorporated herein by reference in its entirety.

### [Background Art]

Secondary batteries, unlike primary batteries, are rechargeable and have been widely researched and developed in recent years due to the potential for miniaturization and large capacity. The demand for secondary batteries as an energy source is increasing rapidly due to the increasing technological development and demand for mobile devices, as well as electric vehicles and energy storage systems that are emerging in response to environmental protection needs.

Secondary batteries are categorized into coin type batteries, cylindrical batteries, prismatic batteries, and pouch type batteries according to the shape of the battery case. In a secondary battery, an electrode assembly mounted inside the battery case is a chargeable and dischargeable power generating device comprising a stacked structure of electrodes and separators.

Since secondary batteries are demanded to be used continuously for a long period of time, it is necessary to effectively control the heat generated during the charging and discharging process. If the secondary battery is not properly cooled, the increase in temperature will cause an increase in current, which will cause an increase in current, which will again cause an increase in temperature, which will cause a chain reaction, eventually leading to the catastrophic condition of thermal runaway.

In order to effectively dissipate the heat generated by secondary batteries, heat sinks (also called cooling plates) through which coolant flows are widely used. The heat sink is mounted on the bottom surface of a group of secondary batteries, such as a battery pack mounting a plurality of secondary batteries and performs a cooling function by absorbing heat generated inside the pack with a coolant and releasing it to the outside.

Heat sinks can be divided into brazing heat sinks and extruded heat sinks according to their structure or manufacturing method. A brazing heat sink is a structure in which two plates are brazed together to form a flow path, which has a high degree of freedom in flow path design but has a disadvantage in structural rigidity due to material degradation. On the other hand, extruded heat sinks, which are manufactured as a continuum through extrusion molding, have an advantage in structural rigidity, but have the disadvantage that only straight flow paths can be realized, resulting in a large number of ports, and thus, pipes for connection take up space.

### [Summary]

### [Technical Problem]

The present disclosure is directed to providing a heat sink assembly that is an extruded heat sink and does not require a separate pipe for flow path formation, thereby occupying less space, and can improve differential pressure by reducing the number of components with a simplified flow path configuration.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a heat sink assembly. In one example, a heat sink assembly includes first and second heat sinks having a plurality of ribs integrally molded along a length direction by extrusion molding, the spaces between the ribs forming a flow path through which a coolant flows, the first and second surfaces at both ends of the length direction being open, and the first and second heat sinks having communication ports on one side wall adjacent to the second surface, wherein the first and second heat sinks are integrally formed by the side walls forming a bonding surface in a way that the communication ports align, and the ribs of the first and second heat sinks have a length such that both ends thereof are spaced apart from the first and second surfaces by a predetermined distance, and the open first and second surfaces of both ends of the first and second heat sinks are closed by end plugs inserted into the first surface and the second surface and spaced apart from the ends of the ribs.

In one aspect of the present disclosure, the first surface and the second surface of the first and second heat sinks are each closed with one end plug, and both ends of the side walls of the first and second heat sinks forming the bonding surface may be formed with a cutaway part corresponding to a depth into which the end plug is inserted.

One of the first and second heat sinks comprises an inlet port communicating with the flow path, meanwhile, the other heat sink comprises an outlet port communicating with the flow path.

The inlet port and the outlet port may be located in the space between the end plug on the first surface and the rib.

In addition, the inlet port and the outlet port may be located in a diagonal direction with respect to the communication port.

Further, the ribs of the first and second heat sinks may be configured such that a first end of the first surface side is further away from the first surface as it is closer to the bonding surface, and a second end of the second surface side is closer to the second surface as it is closer to the bonding surface.

Meanwhile, according to an aspect of the present disclosure, the first and second heat sink modules may be provided in pairs with the side walls forming a bonding surface in a way that the communication ports of the first and second heat sink modules align, and an outlet port provided on one module may be connected by a pipe member with an inlet port provided on the other module.

The heat sink assembly of the present disclosure, wherein the second heat sink comprising another communication port on the side wall adjacent to the first surface, the heat sink further comprises a third heat sink, wherein the third heat sink comprises a plurality of ribs integrally molded along a length direction of the third heat sink by extrusion molding inside the third heat sink, the space between the ribs forming a flow path for the coolant to flow, the first and second surfaces of the third heat sink at both ends of the length direction being open, the heat sink having a communication port on one side wall adjacent to the second surface, and wherein the second and third heat sinks are integrally formed of the side walls forming a bonding surface in a way that the communication ports of the first and second heat sink modules align, and wherein the rib of the third heat sink has a length such that both ends thereof are spaced apart from the first and second surfaces by a predetermined distance, and the open first and second surfaces of both ends of the third heat sink may be closed by end plugs inserted into the first surface and the second surface and spaced apart from the ends of the rib.

Further, each of the first surface and the second surface of each of the first to third heat sinks may be closed with one end plug, and both ends of the side walls of the first and third heat sinks forming the bonding surface may be formed with a cutaway part corresponding to a depth at which the end plug is inserted.

One of the first and third heat sinks may be provided with an inlet port communicating with the flow path, meanwhile, the other heat sink may be provided with an outlet port communicating with the flow path.

Among the inlet port and outlet port, one port may be located in a space between an end plug on the first surface and a rib, and the other port may be located in a space between an end plug on the second surface and a rib.

According to one aspect of the present disclosure, the inlet port and outlet port may be located in a diagonal direction with respect to the nearest communication port on the upstream side, based on the flow of the coolant.

Such a heat sink assembly of the present disclosure may be continuously expandable, wherein the Nth heat sink (wherein N is a natural number of 3 or more) and the (N+1)th heat sink are integrally formed by forming a bonding surface in a way that the communication ports formed on one side wall align, and the open first and second surfaces of both ends of the (N+1)th heat sink are closed by end plugs inserted into the first surface and the second surface and spaced apart from the ends of the ribs formed along the length direction.

### [Advantageous Effects]

The heat sink assembly of the present disclosure, having the configuration as described above, has excellent structural rigidity because the heat sink is manufactured as a continuum by extrusion molding, meanwhile, by performing a machining processing on the length direction both ends and side walls of the ribs integrally formed in the heat sink, it becomes possible to form an internal flow path between the interconnected heat sinks, and to configure a cooling passage divided into an inlet port and an outlet port by closing the open surface using the end plug.

Accordingly, the heat sink assembly of the present disclosure, while having an extruded heat sink as a basic framework which is advantageous in structural rigidity, occupies less space by not requiring a separate pipe for forming the flow path, can improve the differential pressure by reducing the number of components with a simplified flow path configuration, and can easily expand the heat dissipation area by increasing the number of heat sinks being bonded.

However, the technical effects that can be obtained through the present disclosure is not limited to the above-described effects, and other effects not mentioned can be clearly understood by a person skilled in the art from the description described below.

### [Brief Description of the Drawings]

Because the following drawings attached to the present specification illustrate exemplary aspects of the present disclosure and serve to facilitate understanding of the technical idea of the present disclosure together with the detailed description of the disclosure described below, the present disclosure should not be limitedly interpreted on the basis of the drawings.
FIG. 1 is a drawing illustrating a heat sink assembly according to one aspect of the present disclosure.
FIG. 2 is a decomposition perspective view of the heat sink assembly.
FIG. 3 is a detail view of part "A" of FIG. 1.
FIG. 4 is a detail view of part "B" of FIG. 1.
FIG. 5 is an overall view of the rib structure of the heat sink assembly of FIG. 1.
FIG. 6 is a drawing illustrating one aspect of the heat sink assembly with a third heat sink added.
FIG. 7 is a drawing illustrating an exemplary heat sink assembly including four heat sinks.
FIG. 8 is a drawing illustrating coolant flow in a heat sink assembly including two heat sinks.
FIGS. 9 and 10 are drawings illustrating an aspect of the heat sink assembly of FIG. 8 bonded to both sides of a pack center frame.
FIG. 11 is a drawing illustrating coolant flow for the heat sink assembly of FIG. 6 with three heat sinks bonded in a row.
FIG. 12 is a drawing illustrating coolant flow for the heat sink assembly of FIG. 7 in which four heat sinks are bonded in a row.

### [Detailed Description]

The present disclosure may have various modifications and various aspects, and thus specific aspects thereof will be described in detail below.

However, it should be understood that the present disclosure is not limited to the specific aspects, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a heat sink assembly. In one example, a heat sink assembly includes first and second heat sinks having a plurality of ribs integrally molded formed along a length direction by extrusion molding therein, the spaces between the ribs forming a flow path through which a coolant flows, the first and second heat sinks having open first and second surfaces at both ends of the length direction, and a communication port on one side wall adjacent the second surface, the first and second heat sinks are integrally formed by the side walls forming a bonding surface in a way that the communication ports align, the first and second heat sinks having ribs having ends spaced apart from the first and second surfaces by a predetermined distance, the open first and second surfaces at both ends of the first and second heat sinks being closed by end plugs inserted into the first surface and the second surface and spaced apart from ends of the ribs.

The heat sink assembly of the present disclosure having the above configuration, wherein the heat sinks are manufactured as a continuum by extrusion molding to possess excellent structural rigidity, meanwhile, machining processing is performed on the length direction ends and side walls of the ribs integrally formed in the heat sinks to form an internal flow path between the interconnected heat sinks, and the end plugs close the open surfaces to form a cooling passage divided into an inlet port and an outlet port.

Accordingly, the heat sink assembly of the present disclosure, while having an extruded heat sink as a basic framework which is advantageous in structural rigidity, occupies less space by not requiring a separate pipe for forming the flow path, can improve differential pressure by reducing the number of components with a simplified flow path configuration, and can easily expand the heat dissipating area by increasing the number of bonded heat sinks.

Hereinafter, specific aspects of a separation wall member for a pack case 130 according to the present disclosure will be described in detail with reference to the accompanying drawings. For reference, the directions of front, back, up, down, left, and right used in the following description to designate relative positions are for the purpose of understanding and refer to the directions shown in the drawings unless otherwise specified.

### [first aspect]

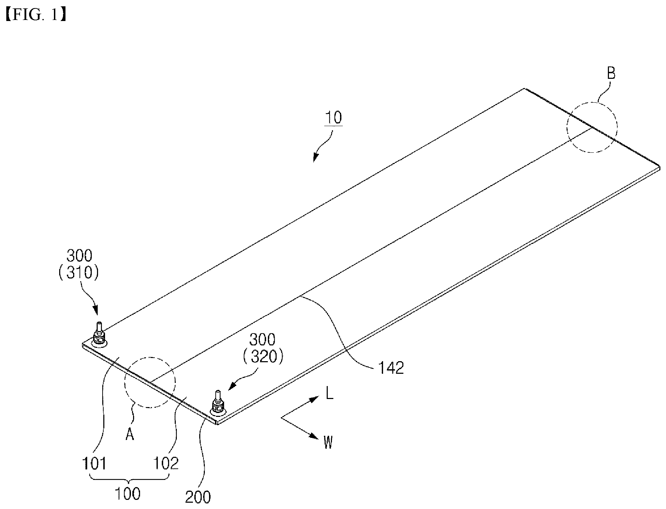

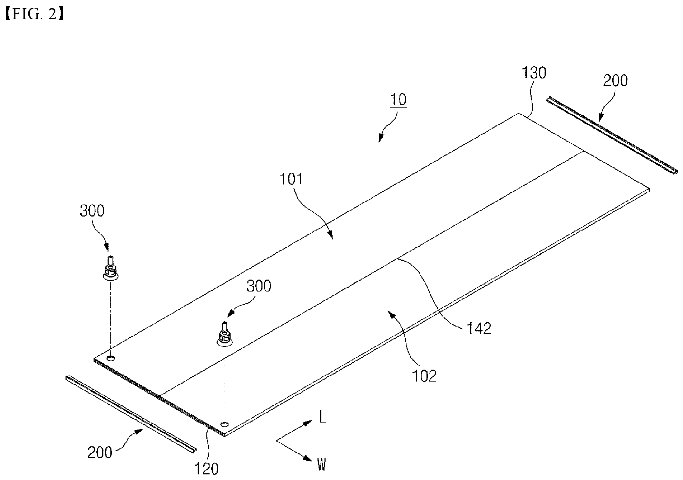

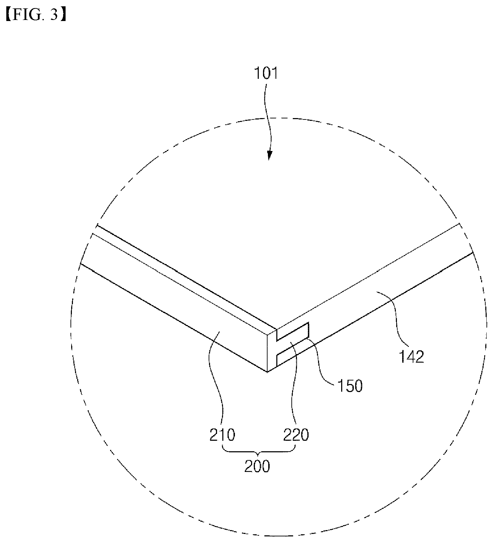

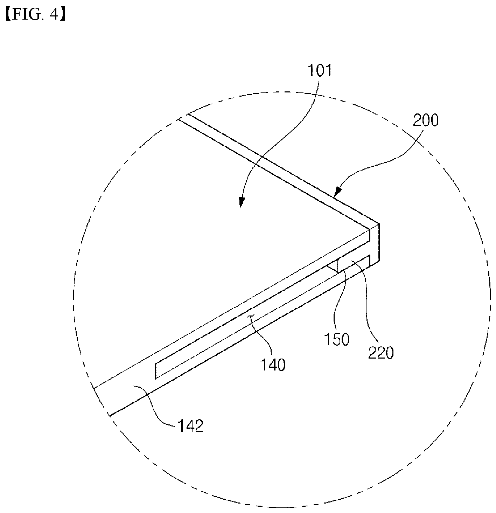

FIG. 1 is a drawing illustrating a heat sink assembly according to one aspect of the present disclosure, FIG. 2 is a decomposition perspective view of the heat sink assembly, FIG. 3 is a detail view of part "A" of FIG. 1, and FIG. 4 is a detail view of part "B" of FIG. 1.

Referring to the attached FIGS. 1 to 4, the heat sink assembly 10 of aspects of the present disclosure will be described in detail.

The heat sink assembly 10 of the present disclosure includes a first heat sink 101 and a second heat sink 102, and an end plug 200 that seals the open surfaces of the first and second heat sinks 101, 102. The open surfaces of the first and second heat sinks 101, 102 are surfaces at both ends of a length direction L, and for ease of description, the two open surfaces will be referred to as a first surface 120 and a second surface 130, respectively. Here, the length direction L is defined as referring to the extrusion molding direction of the heat sink, in other words, the direction in which the rib 110 extends, and the width direction W is defined as referring to a direction orthogonal to the length direction L in which the plurality of ribs 110 are spaced apart disposed.

The first heat sink 101 and the second heat sink 102 are manufactured with basically the same structure. For example, the first and second heat sinks 101, 102 may be manufactured as extrusion molding in which a plurality of ribs 110 along the length direction L are integrally molded. The first and second heat sinks 101, 102 may be prepared by cutting the extrusion continuously manufactured by extrusion molding to a suitable length. In the first and second heat sinks 101, 102, the space between the spaced apart ribs 110 forms a flow path 112 through which the coolant flows, and the first surface 120 and the second surface 130 at both ends of the length direction L are open due to the characteristics of the extrusion.

The first and second heat sinks 101, 102 are integrally formed by firmly bonding one side wall of the first and second heat sinks through a coupling process, for example, friction stir welding. On the side wall where the first and second heat sinks 101, 102 are coupled to each other, in other words, on the bonding surface 142, machining processing is performed to form a communication port 140 for the first and second heat sinks 101, 102 prior to bonding. By the communication ports 140 provided on the bonding surface 142, the flow paths 112 of the first and second heat sinks 101, 102 are interconnected.

FIG. 3 illustrates a structure in which the communication port 140 is machined by incising a predetermined length inwardly from an end of the side wall. In other words, with reference to the drawing, the communication port 140 is provided on one side wall adjacent to the second surface 130. Of course, it is possible to form and bond the communication port 140 in the middle of the side wall, but in order to facilitate the flow of coolant between the first and second heat sinks 101, 102, the communication port 140 may be preferably located at the end of the side wall. It is also advantageous in that the processing of the communication port 140 by cutting a portion of the end of the side wall can be performed together with the processing for insertion of the end plug 200, which will be described later.

FIG. 4 illustrates a structure in which a space is formed in which the end plug 200 is inserted, and in which the coolant flowing in and out of the first and second heat sinks 101, 102 can be distributed into the flow path 112 between the respective ribs 110. Such spaces are produced by machining processing that cuts a predetermined length about the ends of the ribs 110 accessible through the first surface 120 and the second surface 130.

As shown in the decomposition perspective view of FIG. 2, the end plug 200 has a front surface 210 and an insert portion 220. The insert portion 220 is a protrusion part that inserts into the space between the top and bottom plates of the first and second heat sinks 101, 102, and has a length corresponding to an internal width length (the distance between the inner surfaces of the two side walls) of the first and second heat sinks 101, 102. For example, by friction stir welding performed sequentially on the top and bottom plates of the first and second heat sinks 101, 102, the end plug 200 may be hermetically bonded to the first and second heat sinks 101, 102. By causing the welding depths of the friction stir welding performed the top and bottom plates to overlap, a seal may be completed on all sides of the first surface 120 and the second surface 130.

Referring again to FIG. 4, the rib 110 of the first surface 120 is cut to a depth into which the insert portion 220 of the end plug 200 is to be inserted, and to a length suitable for forming a space between the end plug 200 and the rib 110 through which coolant can flow in and out. Accordingly, the ribs 110 of the first and second heat sinks 101, 102 have a length such that their ends are spaced apart from the first surface 120 by a predetermined distance, and the ends of the ribs 110 are also spaced apart with respect to the insert portions 220 of the end plug 200. Of course, the same cutting processing is performed on the rib 110 of the second surface 130.

In one aspect of the present disclosure, the first surface 120 and the second surface 130 of the first and second heat sinks 101, 102, respectively, may be closed with one end plug 200. For this, both ends of the side walls of the first and second heat sinks 101, 102 forming the bonding surface 142 may be formed with a cutaway part 150 corresponding to the depth at which the end plug 200 is inserted, in other words, the length of the insert portion 220.

With respect to a machining processing of the cutaway part 150, the cutaway part 150 and the communication port 140 can be formed simultaneously, in other words, when forming the cutaway part 150 at the end of the bonding surface 142 of the second surface 130, the cutaway part 150 and the communication port 140 can be formed simultaneously by cutting deeper than the length of the communication port 140. The outer side of the communication port 140 is sealed by the insert portion 220 of the end plug 200, and by forming the communication port 140 successively in the incision in this manner, the processing procedure is simplified.

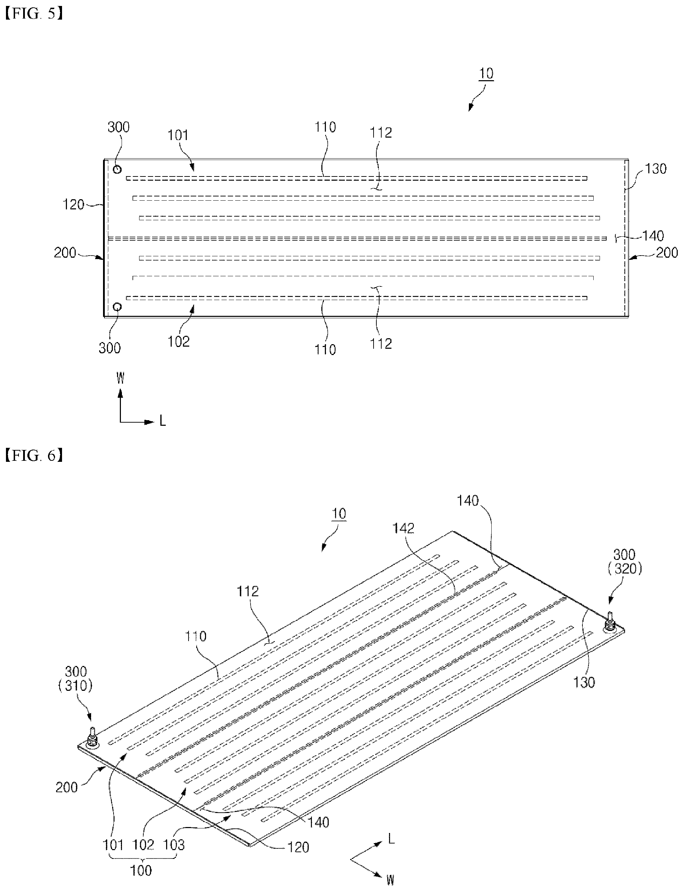

FIG. 5 is a drawing illustrating the overall rib 110 structure of the heat sink assembly 10. While the overall length of each rib 110 is almost the same, the points at which the two ends of each rib 110 are located are formed differently. This variation in the structure of the ribs 110 is produced by adjusting the machining depth of the cutting tool approaching through the first surface 120 and the second surface 130.

As shown in FIG. 5, the ribs 110 of the first and second heat sinks 101, 102 may be configured in such a way that one end of the first surface 120 gradually moves away from the first surface 120 as it is closer to the bonding surface 142, and the other end of the second surface 130 gradually moves closer to the second surface 130 as it is closer to the bonding surface 142. In other words, since the insert portion 220 of the end plug 200 is in the form of a flat plate having a certain protruding length thereof, the coolant flow space between the end plug 200 on the first surface 120 and the second surface 130 and the ribs 110 varies with position due to the arrangement of the ribs 110 as described above. This is to promote smooth flow of the coolant, which will be described in the third aspect.

### [second aspect]

FIG. 6 illustrates a second aspect that expands the heat transfer area of the heat sink assembly 10 by adding a third heat sink 103 in the width direction W to the first and second heat sinks 101, 102 described in the first aspect.

Since the third heat sink 103 has the same structure as the first and second heat sinks 101, 102, a repeated description of the third heat sink 103 will be omitted. However, since the second heat sink 102 is bonded to the first heat sink 101 and should also be bonded to the third heat sink 103, the second heat sink 102 is modified to have another communication port 140 on the side wall adjacent to the first surface 120. The added communication port 140 is formed on a side wall opposite to the communication port 140 adjacent to the second surface 130, in other words, the two communication ports 140 provided in the second heat sink 102 are located in a diagonal direction from each other with different side walls being formed.

The third heat sink 103 has basically the same structure as the first and second heat sinks 101, 102, only the position of the communication port 140 is adjusted to achieve a fluid connection with the second heat sink 102. In other words, the third heat sink 103 is also manufactured from the same extrusion. The communication port 140 of the third heat sink 103 is located on one side wall adjacent to the first surface 120 to connect with the communication port 140 added to the second heat sink 102. The second and third heat sinks 102, 103 have side walls forming another bonding surface 142 such that the communication ports 140 of the second and third heat sinks 102, 103 align, thereby making the first and third heat sinks 101 to 103 integrally formed.

In the third heat sink 103, both ends of the rib 110 have lengths spaced apart from the first surface 120 and the second surface 130 by a predetermined distance, and the open first surface 120 and the second surface 130 of both ends of the third heat sink 103 are closed with end plugs 200 inserted into the first surface 120 and the second surface 130 and spaced apart from the ends of the rib 110. In addition, as described in the first aspect, the first surface 120 and the second surface 130 of the first to third heat sinks 101 to 103 are each closed with one end plug 200, and both ends of the side walls of the first to third heat sinks 101 to 103 forming the bonding surface 142 may be formed with a cutaway part 150 corresponding to the depth at which the end plug 200 is inserted.

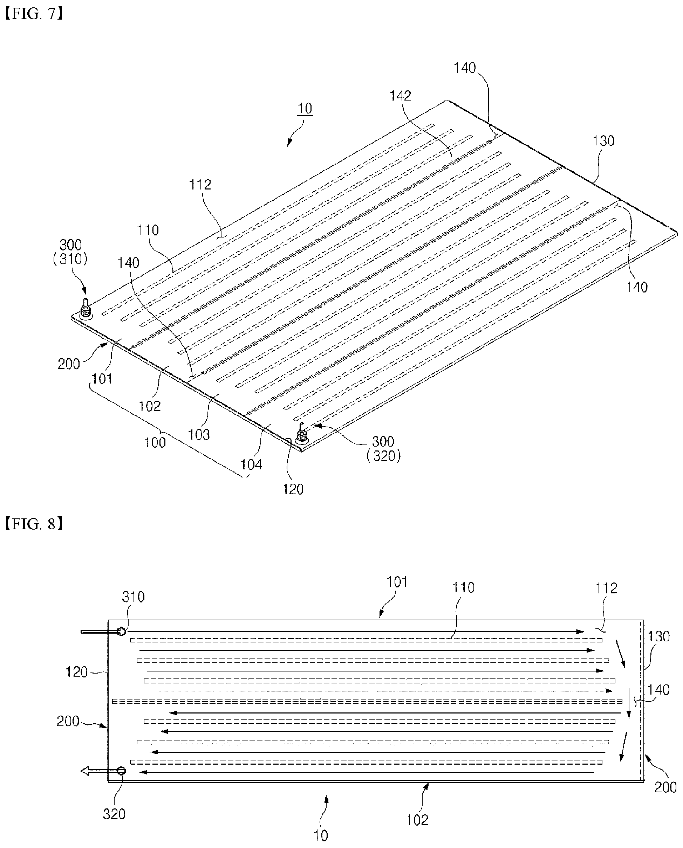

From the above description, it can be clearly understood that the heat sink assembly 10 of the present disclosure can continue to extend along the width direction W with four or more heat sinks in the same manner. For example, referring to the heat sink assembly 10 having the first to third heat sinks 101 to 103 of FIG. 6, an Nth heat sink (wherein N is a natural number greater than or equal to 3) and an (N+1)th heat sink are mutually bonded together to form an integral unit with communication ports 140 formed on one side wall. The open first surface 120 and second surface 130 at both ends of the (N+1)th heat sinks are closed by end plugs 200 that are inserted into the first surface 120 and the second surface 130 and spaced apart from the ends of the rib 110 formed along the length direction L, so that they can be continuously extended. Referring now to FIG. 7, a heat sink assembly 10 including four heat sinks is exemplarily shown, with the addition of a fourth heat sink 104.

The heat sink assembly 10 of the present disclosure is simplified in that each heat sink is prepared from the same extrusion, so that the components that need to be prepared separately are a single end plug 200 that integrally closes the first surface 120 and the second surface 130. Of course, the position of the communication ports 140 should be alternated, but the position of the communication ports 140 is adjusted by machining processing, and in this respect the heat sink assembly 10 of the present disclosure is highly expandable.

### [third aspect]

In a third aspect, various aspects of coolant flow into and out of the heat sink assembly 10 of the first and second aspects described above will be described.

FIG. 8 is a diagram illustrating coolant flow in a heat sink assembly 10 including two heat sinks. Referring to FIG. 8, one of the first and second heat sinks 101, 102 has an inlet port 310 coupled to an internal flow path 112, meanwhile the other heat sink has an outlet port 320 coupled to the internal flow path 112.

Since the communication port 140 fluidly connecting the first and second heat sinks 101, 102 is adjacent to the second surface 130, it may be desirable for the inlet port 310 and outlet port 320 to be located on the first surface 120 in a diagonal direction with respect to the communication port 140 to obtain a sufficiently long flow path. Further, the inlet port 310 and the outlet port 320 are located in a space between the end plug 200 and the rib 110 on the first surface 120. Since the space between the end plug 200 and the rib 110 is a space shared by each of the flow paths 112, the ports 300 may be positioned to allow coolant to flow in and out through this space, thereby allowing a smooth flow of coolant for all of the flow paths 112.

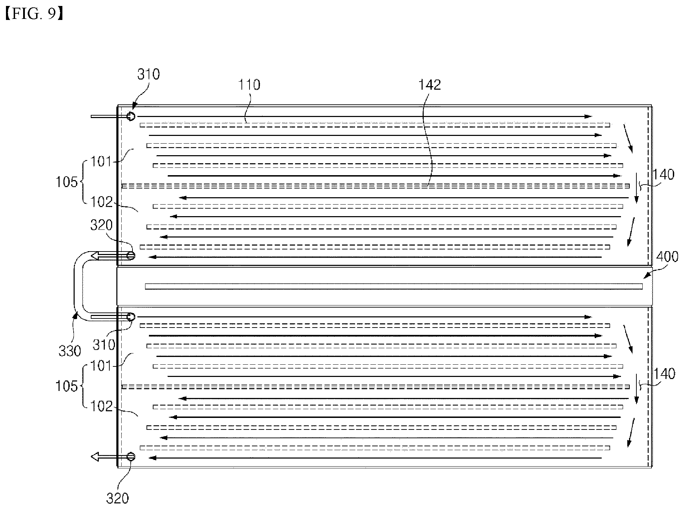

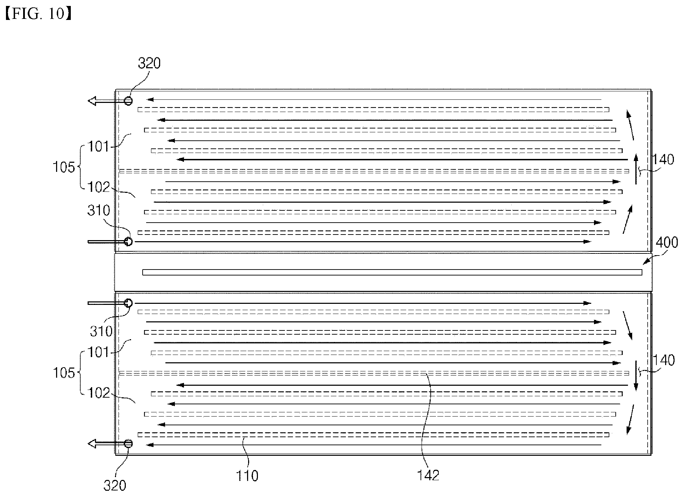

FIGS. 9 and 10 are drawings illustrating aspects in which the heat sink assembly 10 of FIG. 8 is bonded to both sides of the pack center frame 400, respectively. The respective aspects of FIGS. 9 and 10 differ in the flow form of the coolant formed in the heat sink assembly 10.

In the aspect of FIG. 9, the heat sink assembly 10 of FIG. 8 becomes two modules 105 (first and second heat sink modules) connected to each other by flow paths 112 to form a further expanded heat sink assembly 10. This differs slightly from the expansion by bonding between heat sinks described in the second aspect in that each module 105 is bonded against the pack center frame 400 and not bonded between modules 105. Each module frame 105 spaced apart by the pack center frame 400 is fluidly communicating with an outlet port 320 provided on one module 105 to an inlet port 310 provided on the other module 105 by a pipe member 330.

In comparison, in the aspect of FIG. 10, two modules 105 are the same in construction bonded about the pack center frame 400, but each module 105 is not fluidly communicating with the other. This aspect is advantageous in that it allows for various configurations of coolant flow in and out. For example, as shown in FIG. 10, by configuring the port 300 of each module 105 adjacent to the pack center frame 400 as an inlet port 310, it can be designed so that the temperature of the coolant on the side of the pack center frame 400 is maintained at a relatively low temperature.

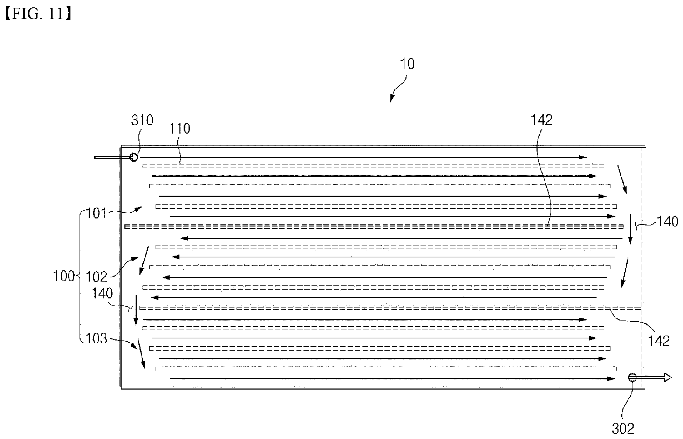

FIG. 11 is a diagram illustrating coolant flow for the heat sink assembly 10 of FIG. 6 in which three heat sinks are bonded in a row. One of the first and third heat sinks 101, 103 has an inlet port 310 coupled to the flow path 112, meanwhile the other heat sink has an outlet port 320 coupled to the flow path 112. Accordingly, flow paths 112 of the first to third heat sinks 101 to 103 are connected in series, and coolant flows in one direction. Since the flow paths 112 of the first to third heat sinks 101 to 103 are internally connected via the communication port 140, it is sufficient for the heat sink assembly 10 to be equipped with only one inlet port 310 and one outlet port 320.

Referring to FIG. 11, among the inlet port 310 and outlet port 320, one port 300 is located in the space between the end plug 200 on the first surface 120 and the rib 110, and the other port 300 is located in the space between the end plug 200 on the second surface 130 and the rib 110. In order to maximize the length of the entire flow path 112, the inlet ports 310 and outlet ports 320 are disposed in a diagonal direction with respect to the nearest communication port 140 on the upstream side (relative to the flow of coolant), respectively, since the number of heat sinks is odd.

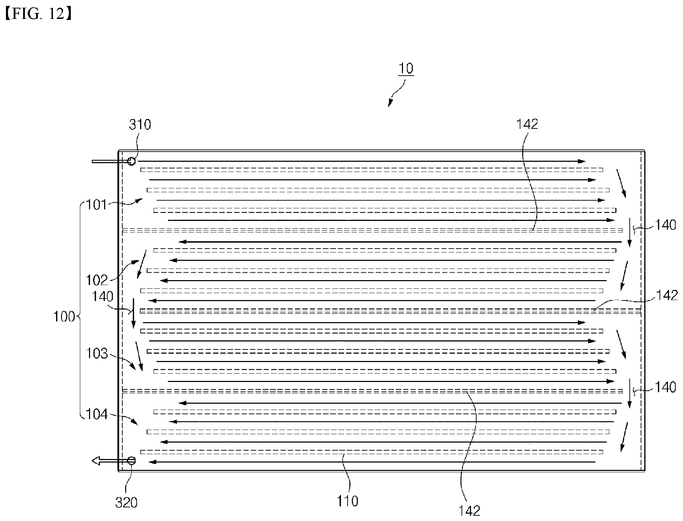

FIG. 12 is a diagram illustrating coolant flow for the heat sink assembly 10 of FIG. 7 with four heat sinks bonded in a row. Basically, the flow form is the same as the heat sink assembly 10 of FIG. 11, with the only difference that the inlet ports 310 and outlet ports 320 are disposed on the same first surface 120 (with reference to FIG. 12) because the number of heat sinks is even.

As above, the present disclosure has been described in more detail through the drawings and aspects. However, since the configuration described in the drawings or aspects described herein is merely one aspect of the present disclosure and do not represent the overall technical spirit of the disclosure, it should be understood that the disclosure covers various equivalents, modifications, and substitutions at the time of filing of this application.

### [Description of Reference Numerals]

10: heat sink assembly
100: heat sink
101: first heat sink
102: second heat sink
103: third heat sink
104: fourth heat sink
105: heat sink module
110: rib
112: flow path
120: first surface
130: second surface
140: communication port
142: bonding surface
150: cutaway part
200: end plug
210: front surface
220: insert portion
300: port
310: inlet port
320: outlet port
330: pipe member
400: pack center frame
L: length direction
W: width direction

## Claims

1. A heat sink assembly comprising:
a first heat sink having a plurality of ribs integrally molded along a length direction of the first heat sink by extrusion molding inside the first heat sink, and a second heat sink having a plurality of ribs integrally molded along a length direction of the second heat sink by extrusion molding inside the second heat sink, spaces between the ribs forming a flow path through which a coolant flows, first and second surfaces of the first heat sink and of the second heat sink at both ends of the length direction being open, and the first and second heat sinks each having a communication port on one side wall adjacent to the second surface,
wherein the first and second heat sinks are integrally formed by forming a bonding surface on the side walls so that the communication ports of the first heat sink and the second heat sink align,
the ribs of the first and second heat sinks have a length such that both ends thereof are spaced apart from the first and second surfaces by a predetermined distance, and
the open first and second surfaces of both ends of the first and second heat sinks are closed by end plugs inserted into the first surface and the second surface and spaced apart from ends of the ribs.

2. The heat sink assembly of claim 1, wherein the first surface and the second surface of the first and second heat sinks are each closed with an end plug, and
both ends of the side walls of the first and second heat sinks forming the bonding surface are formed with a cutaway part corresponding to a depth into which the end plug is inserted.

3. The heat sink assembly of claim 1, wherein one of the first or second heat sinks comprises an inlet port communicating with the flow path, while the other heat sink comprises an outlet port communicating with the flow path.

4. The heat sink assembly of claim 3, wherein the inlet port and the outlet port are located in a space between the end plug on the first surface and a rib.

5. The heat sink assembly of claim 4, wherein the inlet port and the outlet port are each located diagonally with respect to the communication port.

6. The heat sink assembly of claim 5, wherein the ribs of the first and second heat sinks are configured such that a first end of the first surface side of each rib is further away from the first surface as the rib is closer to the bonding surface, and a second end of the second surface side of each rib is closer to the second surface as the rib is closer to the bonding surface.

7. The heat sink assembly of claim 5, wherein first and second heat sinks are provided in pairs as modules with side walls forming bonding surfaces so that the communication ports of first heat sinks and respective second heat sinks align, and
an outlet port provided on one module is connected by a pipe member with an inlet port provided on another module.

8. The heat sink assembly of claim 1, wherein the second heat sink comprises another communication port on the side wall adjacent to the first surface,
the heat sink assembly further comprises a third heat sink, wherein the third heat sink comprises a plurality of ribs integrally molded along a length direction of the third heat sink by extrusion molding inside the third heat sink, a space between the ribs of the third heat sink forming a flow path for the coolant to flow, first and second surfaces of the third heat sink at both ends of the length direction being open, the third heat sink having a communication port on one side wall adjacent to the first surface,
wherein the second and third heat sinks are integrally formed of the side walls forming a bonding surface so that the communication ports of the second and third heat sinks align, and
wherein the ribs of the third heat sink have a length such that both ends thereof are spaced apart from the first and second surfaces by a predetermined distance, and
the open first and second surfaces of both ends of the third heat sink are closed by end plugs inserted therein and spaced apart from the ends of the ribs.

9. The heat sink assembly of claim 8, wherein each of the first surface and the second surface of each of the first, second, and third heat sinks are closed with one end plug, and
both ends of the side walls of the first, second, and third heat sinks forming the bonding surfaces are formed with a cutaway part corresponding to a depth at which the end plug is inserted.

10. The heat sink assembly of claim 8, wherein one of the first or third heat sinks is provided with an inlet port communicating with the flow path, while the other of the first or third heat sinks is provided with an outlet port communicating with the flow path.

11. The heat sink assembly of claim 10, wherein one of the inlet port and outlet port is located in a space between an end plug on the first surface and a rib, and the other is located in a space between an end plug on the second surface and a rib.

12. The heat sink assembly of claim 11, wherein the inlet port and outlet port are located diagonally with respect to the nearest communication port on the upstream side, based on a direction of flow of the coolant.

13. The heat sink assembly of claim 8, wherein an Nth heat sink (wherein N is a natural number of 3 or more) and an (N+1)th heat sink are integrally formed of the side walls forming a bonding surface in a way that the communication ports of the Nth heat sink and the (N+1)th heat sink align, and
open first and second surfaces of both ends of the (N+1)th heat sink are closed by end plugs inserted into the first surface and the second surface and spaced apart from the ends of the ribs formed along the length direction.
